(19) **Europäisches Patentamt / European Patent Office / Office européen des brevets**

(11) **EP 3 261 910 B1**

(12) **EUROPEAN PATENT SPECIFICATION**

(45) Date of publication and mention
of the grant of the patent:
**14.10.2020 Bulletin 2020/42**

(51) Int Cl.:
**B63B 3/68** (2006.01)    **B63B 29/02** (2006.01)

(21) Application number: **15721887.6**

(22) Date of filing: **26.02.2015**

(86) International application number:
**PCT/IT2015/000051**

(87) International publication number:
**WO 2016/135759 (01.09.2016 Gazette 2016/35)**

(54) **SEPARATION STRUCTURE BETWEEN TWO CABINS WITH DOUBLE WALL AND AIR GAP, IN PARTICULAR BETWEEN PASSENGER CABINS**

TRENNSTRUKTUR ZWISCHEN ZWEI KABINEN MIT DOPPELWAND UND LUFTSPALT, INSBESONDERE ZWISCHEN PASSAGIERKABINEN

STRUCTURE DE SÉPARATION ENTRE DEUX CABINES À DOUBLE PAROI ET ENTREFER, EN PARTICULIER ENTRE DES CABINES DE PASSAGERS

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**03.01.2018 Bulletin 2018/01**

(73) Proprietor: **Fincantieri S.p.A.**
**34121 Trieste (IT)**

(72) Inventors:
• **DE LORENZO, Francesco**
**34121 Trieste (IT)**

• **NARDELLA, Tommaso**
**34121 Trieste (IT)**

(74) Representative: **Zanettin, Gianluigi**
**Jacobacci & Partners S.p.A.**
**Piazza Mario Saggin, 2**
**35131 Padova (IT)**

(56) References cited:
**EP-A1- 0 111 857    EP-A1- 0 583 792**
**DE-A1- 3 708 278    DE-U1- 29 919 825**
**US-B2- 8 026 190**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

**Description**

Field of application

This invention relates to a separation structure between two adjacent cabins with double wall and air gap.
In particular, the separation structure is intended to be used for the separation of passenger/crew cabins of cruise ships. This structure can be also used to separate crew cabins.

State of the art

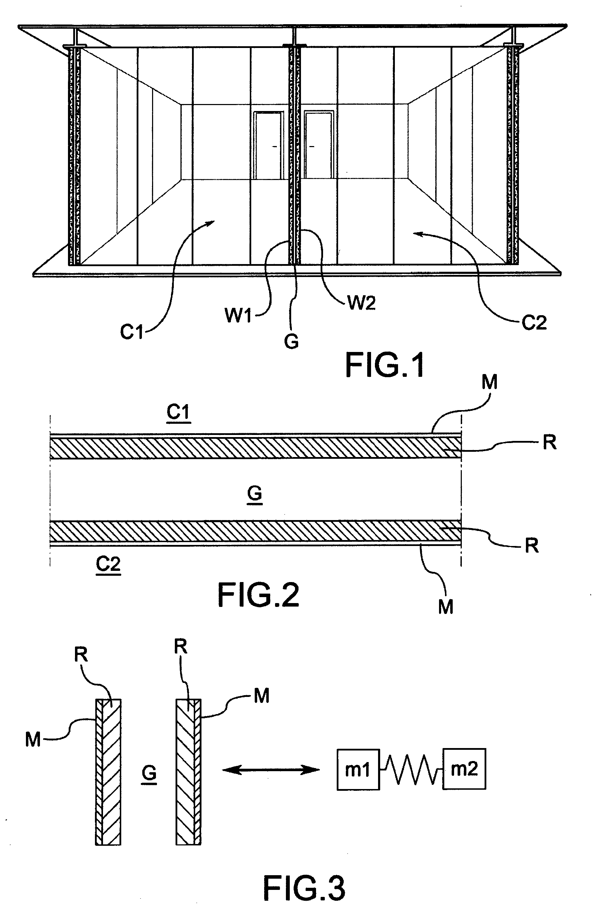

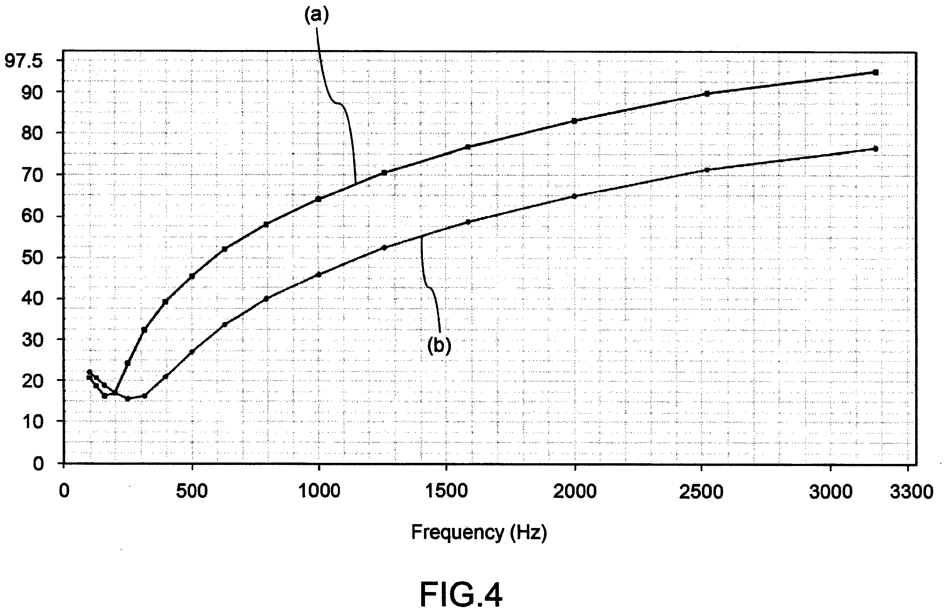

In general, in the ship-building field, a panel for constructing the perimetric walls of a cabin must have two essential properties: incombustibility; and acoustic attenuation capacity.
Panels are classified on the basis of characteristics of mechanical strength, incombustibility and smoke passage insulation, based on tests performed according to the standards imposed by Registries and the laws of the flag states. The fire subdivision classes are those known as B0 (structural integrity without temperature control) and B15 (structural integrity with temperature control) (SOLAS II-2 3.4)
As for noise attenuation, the technical specifications for ships require a noise reduction between two adjacent passenger cabins of at least 41 dB.
In the case of passenger cabins, especially on cruise ships, acoustic attenuation capacity is one of the main elements that define the level of comfort provided by the cabin.
In general, acoustic attenuation capacity is obtained by providing the panels one or more layers of rock wool. In fact, this material provides a high noise reduction capacity, as well as high thermal insulation capacity, which allows conferring thermal resistance to the panel itself.
In particular, noise reduction capacity must be ensured for the border walls between two cabins.
There are many constructive solutions aimed at ensuring acoustic insulation between two adjacent cabins.
A specific constructive solution separates two walls W1 and W2 of two adjacent cabins C1 and C2 using an air gap G, as illustrated in Figures 1 and 2, in such a way that the panels that form the two walls W1 and W2 facing opposite one to the other are not are physically in contact. This constructive solution relates to a double-wall separation structure with air gap.
The single panel consists of a layer of rock wool R, glued to a single thin sheet M made of steel or iron alloy with a variable thickness from 0.4 to 1.2 mm. In condition of use, the panel has the sheet M facing the inside of the cabin, with a suitable surface finish, and is defined as a single-face type.
There are also panels of the double-face type, in which the layer of incombustible, soundproofing material is enclosed between two thin sheets of steel. Generally, the sheet facing the inside of the cabin has a thickness comprised between 0.4 and 0.6 mm while the other sheet (generally of the micro-perforated type) has a thickness comprised between 0.3 and 0.5 mm.
One very important requirement is to reduce the weight of the panels used to construct the perimetric structures of cabins. This requirement is dictated by the need to reduce the weight of ship construction, to solve problems of both stability (upper weights to be balanced with additional ballast in double bottoms) and requests for energy savings in order to increase of the profitability of the ship throughout its life, generally 20 years.
However, the need to reduce the weight of the panels conflicts with the need to ensure adequate noise reduction capacity.
A double-partition separation structure with air gap has noise behaviour comparable to a mass-spring system (as shown in Figure 3).
Being conditions equal, a reduction of the mass results in a worsening of noise reduction capacity, as can be seen in Figure 4, where curve "a" shows the trend of the noise reduction index of a double-wall separation structure with traditional air gap, while curve "b" shows the trend of the noise reduction index of the same separation structure in the case of a halving of the masses of the panels used.
Documents DE 299 19 825 U1 and EP 0 111 857 A1 show separation structures between two adjacent cabins, the structures comprising two partition walls with an air gap in between, the inner side of each wall being provided with a layer of soundproofing material comprising mineral wool.

Presentation of the invention

Therefore, the purpose of this invention is to eliminate, or at least mitigate, the drawbacks of the prior art cited above, by providing a double-wall separation structure with air gap between two adjacent cabins that, being spatial configurations equal, has a weight lower than similar conventional separation systems and, at the same time, has a comparable noise reduction capacity.

A further purpose of this invention is to make available a double-wall separation structure with air gap between two adjacent cabins that has a mechanical strength comparable to similar traditional separation systems.

A further purpose of this invention is to provide a panel for the construction of cabin perimetric walls that, being surface area equal, used in a separation structure between adjacent cabins with partition walls separated by an air gap, has a lower weight than similar traditional panels and, at the same time, allows obtaining comparable noise reduction performance.

A further purpose of this invention is to make available a panel for the construction of cabin perimetric walls that have a mechanical strength comparable to similar traditional panels.

Brief description of the drawings

The technical characteristics of the invention, according to the above-mentioned purposes, can be clearly understood from the claims listed below and its advantages will become more apparent from the detailed description that follows, made with reference to the attached drawings, which show one or more purely exemplary and non-limiting embodiments wherein:

- Figure 1 shows a schematic perspective view of two passenger cabins separated by a double-wall separation structure with air gap;
- Figure 2 shows a diagram of a separation structure between adjacent cabins with a double wall separated by an air gap constructed in the traditional way with rock wool;
- Figure 3 shows a diagram of a separation structure with air gap and a descriptive model of the mass-spring type;
- Figure 4 shows the effect of halving the masses in play on the trend of the noise reduction index of noise reduction in a separation structure with air gap;
- Figure 5 shows a section view of a separation structure between adjacent cabins with a double wall separated by an air gap, constructed according to a first embodiment of this invention, which provides for the use of single-face panels;
- Figure 6 shows an orthogonal head view of a single-face panel according to a first embodiment of the invention;
- Figure 7 shows an orthogonal head view of a single-face panel provided with holes for the passage of electrical cables, according to a second embodiment of the invention;
- Figures 8a and 8b show in detail interconnection means between panels of a same partition wall according to a preferred embodiment of the invention;
- Figure 9 shows an exploded perspective view of a single-face panel with elongated reinforcing members according to a preferred embodiment of the invention;
- Figure 10 shows an exploded perspective view of a single-face panel provided with passage tubes for electrical cables;
- Figures 11 and 12 show two detail views in section of an elongated reinforcing member according to a first and a second embodiment of the invention;
- Figure 13 shows a section view of a separation structure between adjacent cabins with a double wall separated by an air gap, constructed according to a second embodiment of this invention, which provides for the use of double-face panels;
- Figure 14 shows an exploded perspective view of a double-face panel according to a preferred embodiment of the invention;
- Figure 15 shows an exploded perspective view of a single-face panel according to the invention provided with passage tubes for electrical cables, characterized by an angled shape;
- Figure 16 shows an exploded perspective view of a single-face panel according to the invention characterized by a curved shape; and
- Figure 17 shows the curves of the apparent sound reduction index R'w measured for a separation structure between cabins with air gap constructed according to the invention and for a similar structure of the traditional type with rock wool.

Detailed description

With reference to the accompanying drawings, 1 indicates, in its entirety, a double wall separation structure between two adjacent cabins with air gap according to the invention.

Here and in the following description and claims, reference will be made to the separation structure 1 in condition of use. So, any references to a lower or higher position, or a horizontal or vertical direction, should be understood in this sense. When value ranges are mentioned, the extremes are understood to be included in the range unless otherwise indicated.

According to a general embodiment of the invention, the separation structure between two adjacent cabins C1 and C2 comprises two partitions W1 and W2 facing opposite one to the other, that belong to the perimetric structure of two different cabins C1 and C2 and are separated by an air gap 30.

In particular, the air gap 30 has a depth sufficient to avoid any contact between the two walls W1 and W2.

Each of the two partition walls W1 and W2 consists of at least one partition panel 2 or 20 comprising:

- at least one first metal sheet 3, having a first face 3a facing towards the inside of the relative cabin; and;
- at least one layer of soundproofing material 4 associated to a second face 3b of the metal sheet 3, facing towards the air gap 30.

Preferably, the layer of soundproofing material 4 is associated with the first sheet 3 by gluing to avoid damaging the exposed face of the sheet itself.

Advantageously, as will be taken up later, each partition wall W1 and W2 may be composed of two or more of said panels 2 or 20 interconnected to each other two by two.

According to a first essential aspect of this invention, in each panel 2 or 20, the soundproofing material comprises mineral wool having:

- a fibred structure with a content of non-fibred material less than 1% by weight,
- an apparent density between 80 and 120 kg/m$^3$, preferably between 100 and 120 kg/m$^3$, and still more preferably equal to 100 kg/m$^3$, and
- a resistivity to airflow between 50 and 300 kPa s/m$^2$, and preferably not less than 70 kPa s/m$^2$.

Resistivity to airflow is measured according to the procedure described in the UNI 29053 standard or calculated with an empirical formula according to the Delany-Bazley model (specific to rock wool) or with an empirical formula according to the Bies and Hansen model (specific to glass wool).

The model for predicting the sound absorption for normal incidence is derived from the semi-empirical model proposed by Delany-Bazley, subsequently optimized for different types of materials by other authors.

Starting from the mathematical models, it is possible to determine all the physical-acoustic characteristics of a material as a function of the apparent density $\rho_m$ and thickness of the material.

In the specific case, we are interested in resistivity to airflow r, a direct function of the apparent density.

According to Delany-Bazley, the following formula can be used:

$$r = r_1 = 95.35 \cdot \rho_m^{1,37} \left[ N s / m^4 = Pa s / m^2 \right]$$

According to Bies and Hansen, for the resistivity to airflow r of materials assimilable to glass wool, the following formula can be used:

$$r = r_2 = 3,18 \cdot 10^{-9} \cdot \frac{\rho_m^{1,53}}{d^2} \left[ N s / m^4 = Pa s / m^2 \right]$$

where d is the average diameter of the fibres.

Table 1, below, shows the values calculated for the resistivity r1 according to the Delany-Bazley model and r2 according to the Bies and Hansen model for rock wool and mineral wool according to the invention for different values of apparent density and average diameter of the fibres.

As will be taken up later, mineral wool according to the invention has a structure more similar to that of glass wool. Therefore, the resistivity values r of the mineral wool according to the invention may vary depending on the calculation model used.

Table 1

| Material | Apparent density | Fibre diameter | $r_1$ | $r_2$ |
|---|---|---|---|---|
| | kg/m$^3$ | $\mu$m | kPa•s/m$^2$ | kPa•s/m$^2$ |
| Rock wool | 150 | 10 | 91 | 68 |
| Rock wool | 180 | 10 | 117 | 90 |

(continued)

| Material | Apparent density | Fibre diameter | $r_1$ | $r_2$ |
|---|---|---|---|---|
| Rock wool | 220 | 10 | 154 | 122 |
| Rock wool | 150 | 8 | 91 | 106 |
| Rock wool | 180 | 8 | 117 | 140 |
| Rock wool | 220 | 8 | 154 | 191 |
| Rock wool | 150 | 6 | 91 | 189 |
| Rock wool | 180 | 6 | 117 | 249 |
| Rock wool | 220 | 6 | 154 | 339 |
| Mineral wool according to the invention | 100 | 4 | 52 | 228 |
| Mineral wool according to the invention | 120 | 4 | 67 | 302 |

According to a further essential aspect of this invention, in each panel 2 or 20:

- the above-mentioned first metal sheet 3 is made of an iron alloy and has a thickness between 0.5 and 0.9 mm; and

- the above-mentioned layer of soundproofing material 4 has a thickness between 12 and 28 mm, and preferably between 15 and 25 mm.

Preferably, the iron alloy used to make the first sheet 3 of a single panel 2 or 20 is stainless steel or zinc-coated steel. In correspondence of the first face 3a, the first metal sheet 3 can covered with a protective film, for example PVC. In this case, the thicknesses of the first metal sheet indicated in this patent application refer to the first sheet with such finishing.

Surprisingly, the double-wall separation structure with air gap 1 according to the invention allows achieving an apparent sound reduction index R'w between the two adjacent cabins C1 and C2 of not less than 43 dB ±1 dB.

As will be taken up later, the above apparent sound reduction index R'w is comparable to that obtainable from a separation structure of the traditional type, identical to that according to the invention in terms of the thicknesses of the components used (metal sheet and insulating layers), with the only difference that the soundproofing material consists of traditional rock wool having an apparent density between 180 and 220 kg/m$^3$ and a resistivity to airflow between 100 and 200 kPa s/m$^2$.

The apparent sound reduction index R' of a partition wall between two adjacent chambers C1 and C2 is expressed in decibels and is calculated with the following formula:

where:

$$R' = 10 \lg \frac{W_1}{W_2 + W_3} \ \text{dB}$$

- W1 is the value of sound power incident on the head wall;
- W2 is the value of sound power transmitted through the separation element; and
- W3 is the value of sound power transmitted through other components.

Generally, the sound power transmitted in the receiving chamber is the sum of the various components. Assuming that the sound field in the two chambers is sufficiently diffuse, R' can be calculated with the following formula:

$$R' = D + 10 \lg \frac{S}{A} \ \text{dB}$$

where

- D is the difference in the average sound level pressure between the source chamber and the receiving chamber;
- S is the area of the separation wall and it is calculated as the maximum between S and V/7.5, where V is the volume in cubic metres of the receiving chamber.
- A is the equivalent area of sound absorption in the receiving room, calculated as A = 0.16V/T, where T is the reverberation time of the receiving room measured in seconds.

To ensure that the measurements are not influenced by extraneous sounds (such as outside noise), it is necessary to measure the background noise.

The background noise should be at least 6 dB (and preferably more than 15 dB) below the level of the signal to be measured combined with the background noise itself. If the difference is less than 15 dB (but, in any case, greater than 6 dB), the correction of the signal level must be calculated according to the equation

$$L = 10\log\left(10^{L_{ab}/10} - 10^{L_b/10}\right) dB$$

The result in terms of apparent sound reduction index R'w (not less than 43 dB $\pm$1 dB) obtained from a separation structure 1 according to the invention has been confirmed by experimental tests, which will be discussed below, and appears surprising and substantially unexpected, as clarified below.

Compared to traditional separation structures which use rock wool as a soundproofing material, being thicknesses the same, using mineral wool according to the invention causes the mass of the soundproofing material to be substantially halved. In fact, it goes from apparent density values between 180 and 220 kg/m$^3$ of rock wool to values between 100 and 120 kg/m$^3$ of mineral wool according to the invention.

The mineral wool used in the separation structure according to the invention has a resistivity to the airflow comparable to that of traditional rock wool, although slightly higher. It goes from resistivity values between 100 and 200 kPa s/m$^2$ to values not less than 70 kPa s/m$^2$. The greater or lesser theoretical resistivity to air depends on the model adopted. The testing results confirmed that the behaviour of the mineral wool used is more similar to spun glass wool than to mineral wool. So, greater real resistivity gives the mineral wool slightly better sound absorbing properties than the traditional rock wool considered. However, from a theoretical point of view, it is not at all obvious that this property is sufficient to compensate for the effect resulting from a halving of the masses of soundproofing material on the noise reduction capacity of a complex system such as a double-wall separation structure with air gap similar to a mass-spring model. In fact, as shown in the graph of Figure 4 (already mentioned in the introduction), in general a reduction of the masses of soundproofing materials in a complex spring-mass system causes a significant reduction in the apparent noise reduction index R'w.

This assumption is confirmed by experimental comparative tests conducted on a double-wall separation structure with air gap constructed using single-face panels having a layer of soundproofing material of a thickness of 25 mm and a steel sheet of a thickness of 0.7 mm. The tests were conducted using rock wool with an apparent density of 180 kg/m$^3$ and mineral wool according to the invention with an apparent density of 100 kg/m$^3$. The tests conducted show an acoustic performance of the structure with mineral wool significantly less than the structure with traditional rock wool, despite the mineral wool according to the invention having a resistivity to air higher than that of the traditional rock wool used. Furthermore, the acoustic performance of the structure with mineral wool is not improved by increases in the depth of the air gap, unlike the structure with rock wool whose performance, on the contrary, improves with increases of the depth of the air gap.

Therefore, contrary to what could be expected from such theoretical and experimental elements, it was surprising to note that, with thicknesses of soundproofing material of less than 25 mm, and in particular equal to 15 mm, and, i.e. with a further reduction of the mass of soundproofing material, there was no further deterioration of the relative acoustic performance between mineral wool according to the invention and traditional rock wool but that, on the contrary, the structure with mineral wool had a behaviour similar to that of the structure with traditional rock wool and produced apparent noise reduction index values of not less than 43 dB $\pm$1 dB.

Therefore, contrary to the theoretical assumptions and some experimental evidence, within the limits defined by this invention, the use of the said mineral wool instead of traditional rock wool did not worsen the noise reduction performance of a double-wall separation structure with air gap.

Being acoustic performance equal compared to the traditional solution with rock wool, halving of the masses of the soundproofing material (due to a halving of the apparent density at equal thicknesses) has, however, resulted in a significant reduction of the weights of the cabin separation structure, allowing the use of significantly lighter partition panels. As will be taken up below, this weight reduction is particularly important in the case of cruise ships where the weight of the cabins is a significant portion of the total weight of the ship.

A possible explanation of the behaviour measured from the above-mentioned mineral wool (an explanation which is, however, not intended to be binding) can be derived from the internal structure of such material.

**In** fact, the mineral wool according to the invention has significant structural differences with respect to traditional rock wool, having morphological characteristics more similar to those of glass wool.

As already mentioned, the mineral wool used has a fibred structure with a content of n'on-fibred material less than 1% by weight. While a traditional rock wool has a high content of non-fibred material, which can even reach 25% by weight.

The diameter of the fibres of the mineral wool used is generally less than that of traditional rock wool. In particular, the fibres of the fibrous structure of the mineral wool according to the invention have a weighted geometric mean diameter, with respect to the length of the fibres, less than 10 $\mu$m, preferably less than 6 $\mu$m, and still more preferably between about 3 $\mu$m and about 5 $\mu$m.

In the mineral wool according to the invention, the dispersion of the fibres around the mean diameter is much less with respect to conventional rock wool. In particular, in the mineral wool according to the invention, the dispersion of the fibres around the mean diameter has values between 3-6 $\mu$m. The simulation calculations were performed on the basis of 4 $\mu$m.

In the mineral wool according to the invention the fibres have preferential orientations, unlike traditional rock wool that, on the contrary, generally do not exhibit this characteristic. This derives from the production method, which requires a spinning process typical of glass wool, different from that with which conventional mineral wools are produced.

In particular, the mineral wool according to the invention can be obtained with a high-temperature extrusion process and internal centrifugation in the centrifuge basket procedure with a temperature of the centrifuge basket of at least 1,100 °C. This process is, in itself, known and is described in detail in European patents EP551476B1 and EP583792B1, which are considered incorporated herein for the parts relative to this internal centrifugation process.

Preferably, the above-mentioned mineral wool according to the invention consists of artificial vitreous fibres of silicates, having a content of alkaline oxides and alkaline-earth oxides ($Na_2O + K_2O + CaO + MgO + BaO$) greater than 18% by weight.

In particular, the soundproofing material of the invention comprises an organic binder, preferably a terpolymer, mixed with the above-mentioned mineral wool. Preferably, the mineral wool constitutes more than 90% by weight of the material and the binder less than 10% by weight.

In particular, the mineral wool according to the invention can have the following composition expressed in percentages by weight: $SiO_2$ 39-55%; $Al_2Or_3$ 16-27%; CaO 6-20%; MgO 1-5%; $Na_2O$ 0-15%; $K_2O$ 0-15%; ($Na_2O + K_2O$) 10-14.7%; $P_2O_5$ 0-3%; $Fe_2O_3$ (iron in total) 1.5-15%; $B_2Or_3$ 0-2%; $TiO_2$ 0-2%; other 2-2.0%. More further in particular, the mineral wool according to the invention can have the following composition expressed in percentages by weight: $SiO_2$ 39-52%; $Al_2Or_3$ 16-26%; CaO 8-18%; MgO 1-4.9%; $Na_2O$ 2-12%; $K_2O$ 2-12%; ($Na_2O + K_2O$) 10-13.5%; $P_2O_5$ 0-2%; $Fe_2O_3$ (iron in total) 3.2-8%; $B_2Or_3$ 0-1%; $TiO_2$ 0.4-1%.

In particular, a mineral wool according to this invention is described in European patent EP1680561B1 and in US patents US7803729B2 and US8026190B2

Advantageously, the mineral wool according to the invention has thermal properties such as to give the panels a degree of incombustibility within the limits required by the standard (SOLAS II-2 3.4).

Advantageously, the mineral wool according to the invention, having a density of 100 kg/m$^3$ has the following values of thermal conductivity $\lambda$ expressed in W/m K * 10$^{-3}$ with a precision of $\pm 4 * 10^{-3}$ W: 29 at 0 °C; 90 at 400 °C. A rock wool having a density of 220 kg/m$^3$ has an average value of thermal conductivity $\lambda$ of 37 * 10$^{-3}$ W/mK.

More in detail, as regards the thermal resistance properties, essential for the incombustiblity of the material and therefore for the overall characteristics of the separation structure, the mineral wool according to the invention has properties comparable to those of traditional rock wool.

Due to its internal structure and the low density, the mineral wool according to the invention does not offer the same contribution in terms of mechanical strength offered by the rock wool traditionally used. This can have a significant impact on the mechanical behaviour of the panels in the event that the panels used to make the partition walls W1 and W2 of the separation structure are of the "single-face" type, in the sense that they may not have sufficient mechanical strength. Even for the double-face panel, there is a loss of mechanical stiffness due to the lesser coupling of the walls of each panel as the wool does not transmit the forces.

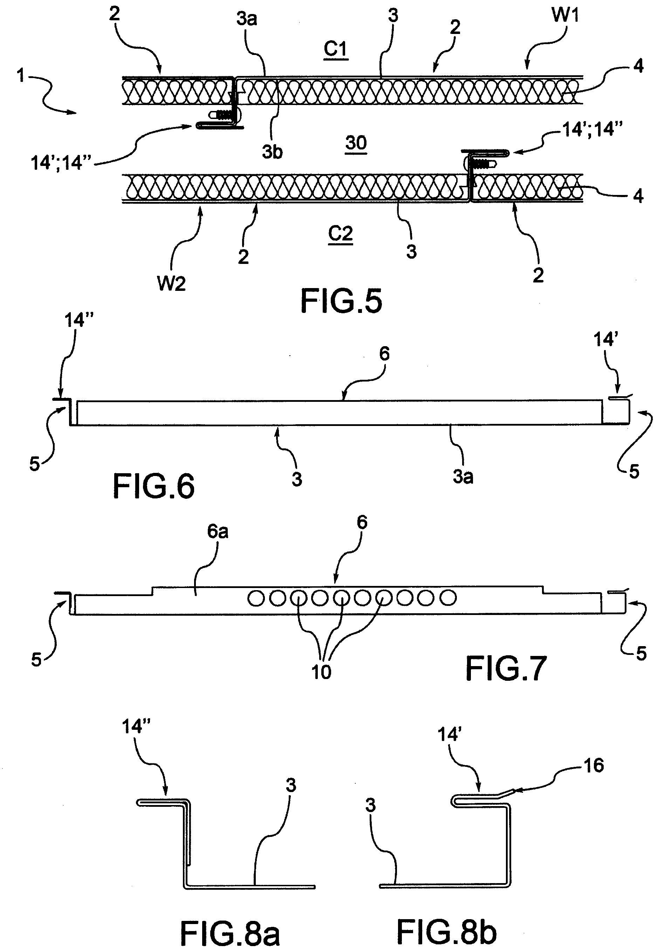

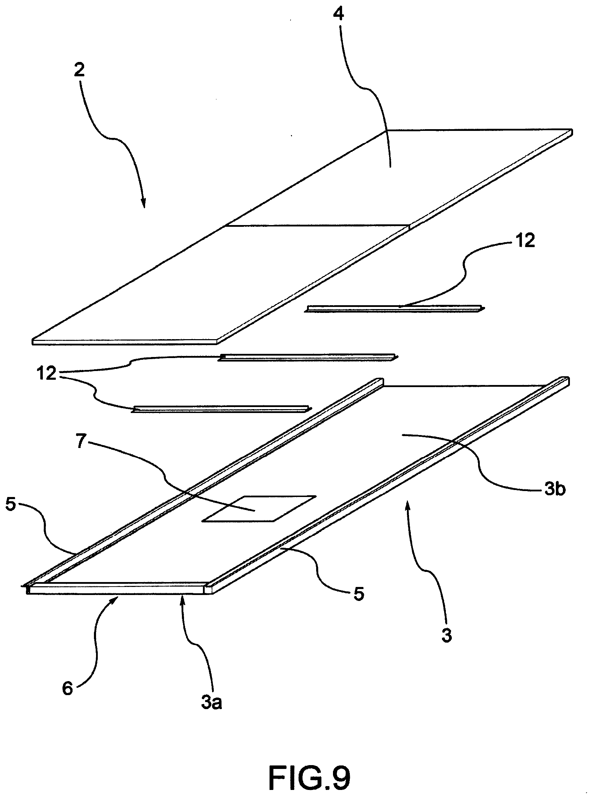

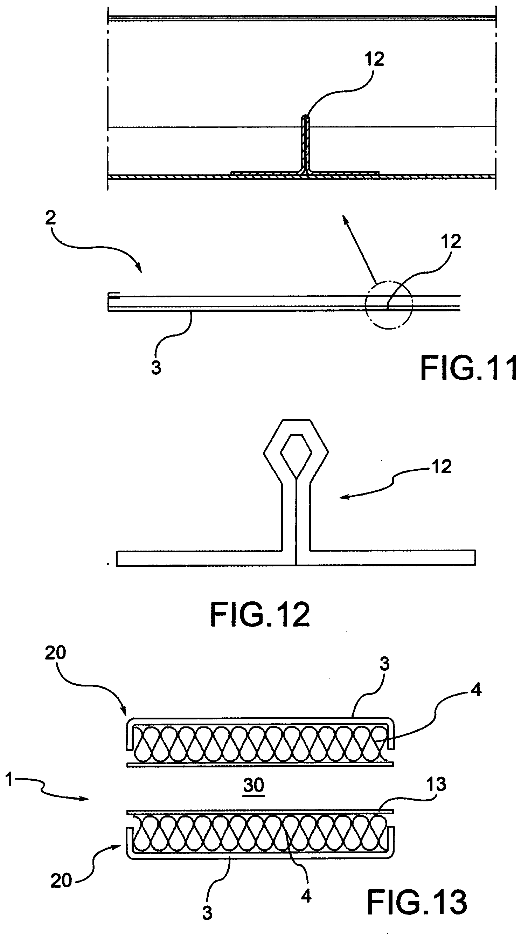

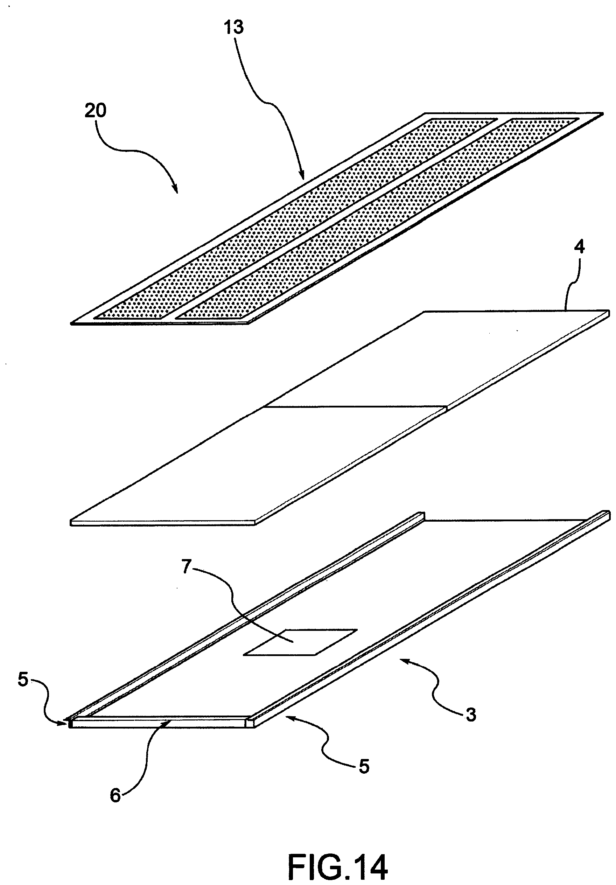

As will be taken up below, a "single face" panel (as shown, for example, in Figures 5 and 9) is a panel in which the layer of soundproofing material 4 is mechanically supported only by the first sheet 3, which defines the visible face of the panel. In a "single-face" panel, there is no provision for a second metal sheet suitable to close the layer of soundproofing material from the opposite side to that of the first sheet, as it is, instead, provided in the case of a "double-face" panel (as shown, for example, in Figures 13 and 14).

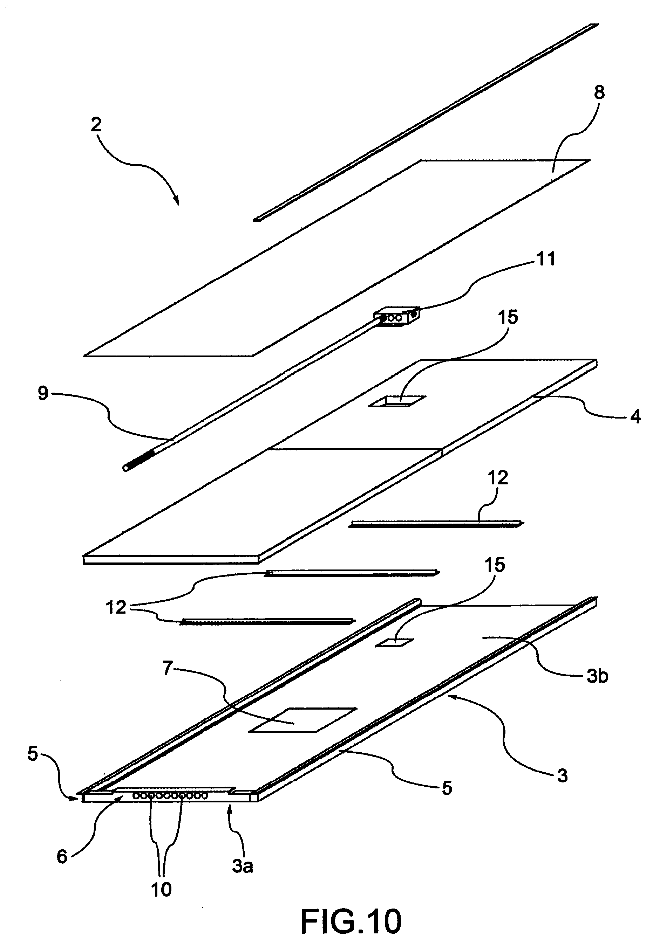

Advantageously, as illustrated, for example, in Figures 9, 10 and 14, the first sheet 3 of the panel 2 or 20 of a partition wall W1 and W2 is folded at least at several of its perimetric edges to provide greater perimetric stiffness to the panel, whether of the single-face (Figures 9 and 10) or double-face (Figure 14) type.

Preferably, as shown, in particular, in Figures 6 and 7, the edges are folded in order to obtain a folded edge comprising at least one L-shaped portion.

In particular, the first sheet 3 of a panel 2 or 20 has a perimetric shape that comprises two pairs of parallel perimetric edges 5 and 6.

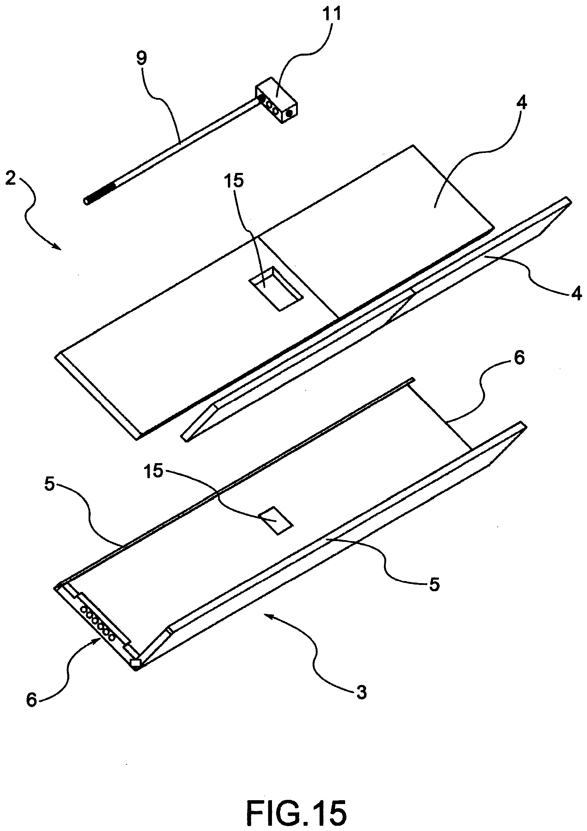

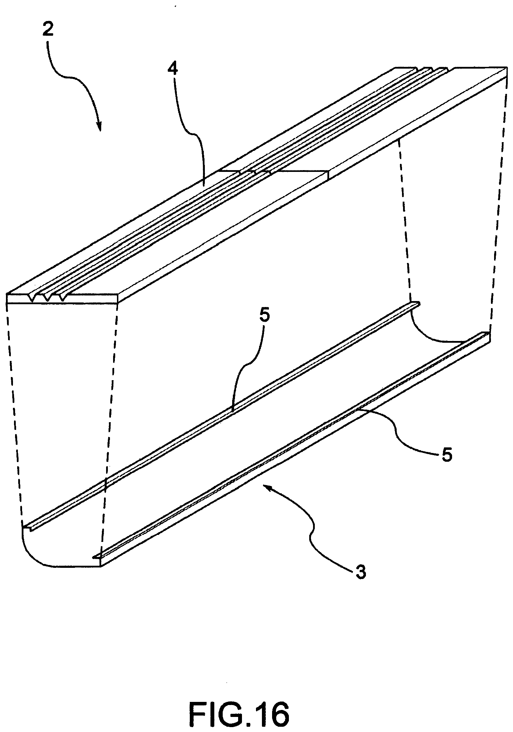

Preferably, the first sheet 3 has a quadrangular perimetric shape, in particular rectangular or square. In correspondence to its main surface (thus excluding any folded edges) the first sheet 3 can be flat, as shown in Figures 9, 10 and 14). The main surface of the first sheet 3 can have an angle with two flat faces, as shown in Figure 15, or be curved, as shown in Figure 16.

According to a preferred embodiment, illustrated in the accompanying drawings, the first sheet 3 has a prevalent development in a particular direction. In fact, a preferred configuration provides that the partition walls W1 or W2 of the perimetric structure of a cabin are constructed with panels with a prevalent vertical development, i.e., with development in height greater than the development in width (horizontally). In this particular embodiment, the perimetric edges of a first pair 5 are therefore longer than the perimetric edges of the second pair 6. The first sheet 3 is folded in correspondence of the pair 5 of longer perimetric edges to confer mechanical stiffness in the development in height of the panel 2 or 20.

Advantageously, as illustrated, for example, in Figures 10 and 14, the folded edges of the first metal sheet 3 perform a function of mechanical retention of the layer of soundproofing material 4. In fact, the first metal sheet 3 defines a sort of open box-like body inside of which the layer 4 is placed.

Advantageously, the first sheet 3 of a panel 2 or 20 can be stiffened also in correspondence of the two shorter perimetric edges 6 by folding the edges themselves or by application on the first sheet of a perimetric stiffening member, preferably L-shaped.

Advantageously, as shown in Figures 9, 10 and 14, the first sheet 3 can be reinforced locally with one or more reinforcing plates 7 associated to it on the second face 3b (not at sight). These reinforcing plates 7 (for example, square-shaped) are preferably made of the same material as the first sheet and serve to strengthen the panel in correspondence, for example, to points intended for fixing of furnishing elements inside the cabin. The reinforcing plates 7 may be associated with the first sheet 3 in any way. Preferably, these plates 7 are glued to avoid damaging the exposed face of the first sheet 3.

Preferably, the panels 2 of the single-face type (i.e., panels in which the layer of soundproofing material 4 is not separated from the air gap 30 by a second metal sheet) comprise a plurality of elongated transverse stiffening members 12 associated to the first sheet 3 in correspondence with its second face 3b, not at sight and embedded in the layer of soundproofing material 4, as shown in Figures 9 and 10.

Advantageously, the elongated members 12 have an inverted T (Figure 11) or Ω (Figure 12) section. These conformations ensure a moment of inertia and, therefore, a strengthening greater with respect to elongated members with an I section.

Preferably, the above-mentioned elongated members 12 are arranged parallel to the pair 6 of the shorter sides of the first sheet 3. In other words, these elongated members are arranged in a horizontal direction. The number and arrangement of these elongated reinforcing members depend on the width of the panel 2. In particular, the number of such elongated members 12 increases with the increase of the width of the panel measured as the distance between the two longer sides 5 of the panel.

The application of such elongated stiffening members 12 is preferred in the case where the first metal sheet has a thickness between 0.5 and 0.8 mm. In the case of thicknesses of the first sheet 3 greater than 0.8 and not greater than 0.9 mm, such elongated members are not provided, since the greater thickness of the first sheet 3 is already sufficient to strengthen the panel 2.

Similarly to the reinforcing plates 7, also the elongated transverse stiffening members 12 may be associated to the first sheet 3 in any way, but are preferably glued to the first sheet 3 to avoid damaging the exposed face of the sheet.

Advantageously, a single-face panel 2 can be of a simple type, in which the layer of soundproofing material 4 is directly facing the air gap 30 (Figure 9), or of an "electrified" type, in which the panel is used to support electrical cables placed externally onto the layer of soundproofing material (Figure 10), i.e., on the face of the latter facing the air gap 30.

Advantageously, in a panel 2 of the "electrified" type, the first sheet 3 is provided with at least one folded perimetric edge 6 wherein a plurality of holes 10 are made for the passage of electrical cables between the tubes 9 and the outside of the panel 2. The tubes 9 then connect the holes 10 to one or more electrical boxes 11 embedded in the panel 2. For this purpose, special shaped openings are formed on the first sheet 3 and on the soundproofing layer.

In particular, as illustrated in Figures 7 and 10, the above-mentioned holes 10 are formed on a portion 6a of folded edge protruding with respect to the layer of soundproofing material 4 to allow the connection with the tubes 9.

Preferably, in the case of the use of single-face panels (simple or electrified), the separation structure 1 according to the invention provides that the air gap 30 has a depth between 10 and 60 mm, and preferably between 40 and 60 mm , measured between the outer surfaces of the layers of soundproofing material 4 of the two panels 2. However, as already mentioned previously, it is sufficient that the air gap has a depth sufficient to avoid any contact between the two walls W1 and W2. Subject to this requirement, the specific value of the depth of the air gap can be chosen according to the constructive requirements of the separation structure 1.

As regards the thickness of the layer of soundproofing material 4 of the first sheet 3, for double-face panels 2 (simple or electrified) a thickness of 15 mm is preferred. This thickness is compatible with the characteristics that a panel must have for inclusion in fire class B0. If one must construct panels 2 conforming to fire class B15, the thickness of the layer of soundproofing material must be increased to 25 mm.

Preferably, if a single-face panel must conform to fire class B15, the layer of soundproofing material 4 continues to have a thickness of 15 mm, but is separated from the air gap 30 by a layer of non-metallic material 8 having a heat protective function for the tubes 9 placed on it. In fact, the above-mentioned one or more tubes 9 for the passage of electrical cables are interposed between the layer of soundproofing material 4 and the layer of non-metallic material 8, as shown in Figure 10.

As regards the thickness of the first metal sheet 3, for single-face panels 2 (simple or electrified) a thickness between 0.6 and 0.8 mm is preferred and, still more preferably, 0.7 mm.

As already specified above, in the separation structure 1 according to the invention, the two walls W1 and W2 facing opposite one to the other can each be constructed from one or more panels 20 of the double-face type 20 separated by an air gap, as schematically shown in Figure 13.

As already specified above, compared to a single-face panel 2 of the simple type, a panel 20 of the double-face type 20 comprises a second metal sheet 13 that is associated to the first sheet 3 and faces directly on the air gap 30, as illustrated in Figures 15 and 16. The layer of soundproofing material 4 is interposed between the above-mentioned two sheets 3 and 13.

Preferably, the second metal sheet 13 is made of the same material as the first sheet 3, i.e., an iron alloy, preferably stainless steel or zinc-coated steel. The second metal sheet 13 may be continuous or micro-perforated, at least for a part of its surface.

Advantageously, a double-face panel 20 is not provided with elongated transverse reinforcing members, since the second sheet contributes significantly to the mechanical strength of the panel.

Preferably, in the case of the use of double-face panels, the separation structure 1 according to the invention provides that the air gap 30 has a depth between 10 and 30 mm, and preferably 20 mm, measured between the outer surfaces of the second metal sheets 13 of the two panels 20.

Preferably, in double-face panels 20, the first metal sheet 3 has a thickness between 0.4 and 0.6 mm, preferably 0.5 mm, while the second metal sheet 13 has a thickness between 0.3 and 0.5 mm, preferably 0.3 mm.

As regards the thickness of the layer of soundproofing material, in double-face panels 2, the layer of soundproofing material 4 preferably has a thickness between 20 and 28 mm, preferably 25 mm.

As already mentioned, each partition wall W1 and W2 of the separation structure 1 according to the invention can consist of two or more of the above-mentioned panels 2 or 20 interconnected to each other two by two.

Advantageously, each of the above-mentioned panels 2 or 20 is provided with mechanical interconnection means 14' and 14". Preferably, the interconnection means are of the male-female type.

According to the preferred embodiments illustrated in the accompanying Figures, the mechanical interconnection means 14' and 14" of each panel 2 or 20 are formed on a pair 5 of parallel folded edges of the first sheet 3. Preferably, in the case of vertical panels with a predominantly vertical development, such interconnection means are formed on the pair of longer edges 5, i.e., along the vertical sides of the panel.

More in detail, the female element 14' and the male element 14" can be formed on portions of folded edge parallel to the main wall of the first sheet 3 (see Figures 8a-b), in the case that assembly is required with a lateral positioning of the panels, or they can be formed on portions of folded edge orthogonal to the main wall of the first sheet 3 (solution not illustrated in the Figures), in the case in which assembly is required with frontal positioning of the panels.

Preferably, as shown in Figures 8a-b, the female element 14' and the male element 14" are obtained with the double folding of the edges.

Advantageously, as shown in particular in Figure 8b, the female elements 14' can have a divaricated end portion 16, which serves as an invitation to the entrance of the male element 14".

Advantageously, in the case in which the partition walls W1 and W2 must ensure a fire resistance conforming to class B15, the jointing areas between the panels must be equipped with joint covers, preferably with interposition of a thermal insulation material between the joint and joint cover.

The single-face 2 or double-face 20 panels constructed according to the invention have a mechanical strength compatible with the technical standards of ship-building regulations (Solas SOLAS, CHAP. II-2, Reg. 13.7.2) that requires resistance to a load of 750 N/m in order to allow the escape of the passengers.

In the case of single-face panels 2 with folded and/or reinforced perimetric edges, the specifications are exceeded by applying an appropriate number of elongated reinforcing members 12 on the first metal sheet.

In the case of double-face panels 20 with folded and/or reinforced perimetric edges, the specifications are fulfilled without the need to apply elongated reinforcing members 12 on the first metal sheet.

Advantageously, the panels 2 or 20 thus constructed have a mechanical strength comparable to similar traditional panels.

The double-wall separation structure 1 with air gap according to the invention was subjected to various tests to measure acoustic performance.

The measurements were made on both a traditional separation structure and one according to the invention. The traditional structure had two partition walls facing opposite one to the other, consisting of 5, identical 600 mm x 2200 mm single-face panels and one non-standard, 120 mm x 2200 mm panel to form a wall of 6.86 m². The panels had the following characteristics: first sheet made of steel with a thickness of 0.7 mm (density 7,800 kg m³) with a 15-mm layer of rock wool having a density of 220 kg/m³ and an air gap of 40 mm measured between the outer surfaces of the layers of rock wool. The single traditional single-face panel has a specific weight on surface of 11.3 kg/m². The structure according to the invention is identical to the traditional one, except for the fact that a mineral wool was used as required by the invention with density of 100 kg/m³ structured in layers of thickness identical to that of the traditional rock wool. Specifically, a material was used that is commercially available on the market from ISOVER SAINT-GOBAIN under the name Ultimate U MPN/A 100. In the specific case, the single single-face panel according to the invention has a specific weight on surface of 9.5 kg/m².

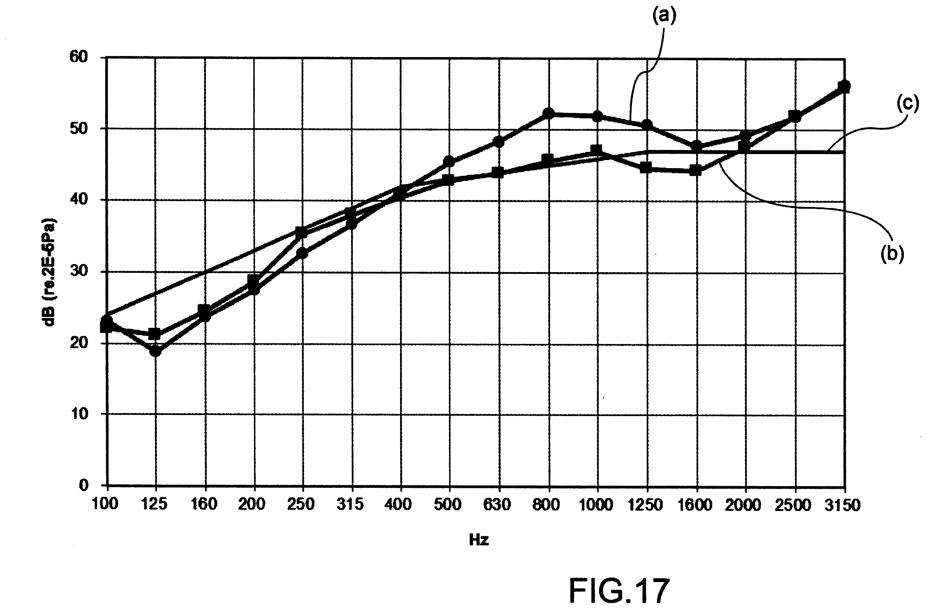

The results of the measurements in terms of the apparent noise reduction index R'w in dB (according to ISO 140/4 and ISO 717/1) are summarized in Table 2 and shown in the graph of Figure 17, where "a" indicates the curve relative to the structure according to the invention, "b" the curve of the traditional structure and "c" the reference curve for the calculation of R'w according to the standard.

Table 2

| Frequency (Hz) | R' Traditional structure [dB] | R' Structure according to the invention [dB] |
|---|---|---|
| 100 | 22.1 | 23.2 |
| 125 | 21.2 | 18.9 |
| 160 | 24.5 | 23.7 |
| 200 | 28.6 | 27.4 |
| 250 | 35.4 | 32.7 |
| 315 | 38.0 | 36.7 |
| 400 | 40.5 | 41.1 |
| 500 | 42.8 | 45.5 |
| 630 | 43.8 | 48.3 |
| 800 | 45.7 | 52.3 |
| 1000 | 47.0 | 51.9 |
| 1250 | 44.6 | 50.7 |
| 1600 | 44.3 | 47.8 |
| 2000 | 47.6 | 49.3 |
| 2500 | 51.9 | 51.8 |
| 3150 | 55.8 | 56.2 |
| | | |
| R'w (dB) | 43.0 | 43.0 |

The traditional structure with rock wool had an apparent noise reduction index R'w of 43 dB, equivalent to the value measured for the separation structure that uses mineral wool according to the invention. The structure according to the invention performs better at medium frequencies between 500 and 1600 Hz, while it performs slightly worse at low frequencies (between 125 and 315 Hz).

Regardless of the absolute values measured for the apparent noise reduction index R'w, the test confirms that the acoustic performance of the separation structure according to the invention is comparable to the similar separation structures traditionally used.

In the specific case, the use of a mineral wool according to the invention (specifically Ultimate U MPN/A 100 from ISOVER SAINT-GOBAIN with a density of 100 kg/m³) allowed obtaining a significant reduction of the weight per square meter of the single panel (-1.8 kg/m$^2$).

The savings on the weight of the single panel is significant considering the impact of cabin panels on total ship weight. A medium-sized a ship requires about 100,000 m$^2$ of panels for the construction of the perimetric structures of cabins. Assuming the use of panels according to the invention for all cabins, there would be a weight reduction of 180 tons.

Table 3, below, shows the weight savings for several single-face panels constructed according to the invention using Ultimate U MPN/A 100 with a density of 100 kg/m$^3$ compared to similar traditional panels constructed using rock wool with a density of 220 kg/m$^3$.

Table 3

| Panel dim. [mm] x [mm] | Thickness first sheet [mm] | Thickness soundproof. layer [mm] | Specific weight Invention panel [kg/m$^2$] | Specific weight Traditional panel [kg/m$^2$] | Δ [ kg/m$^2$] |
|---|---|---|---|---|---|
| 600 x 2,200 type B0 | 0.7 | 15 | 9.5 | 11.3 | -1.8 |
| 600 x 2,200 type B15 | 0.7 | 25 | 9.8 | 12.5 | -2.7 |

Measurements were made of the apparent sound insulation R'w in dB of separation systems according to the invention, varying the thickness of the insulation material and the depth of an air gap. The values measured confirm the fact that the acoustic performances of the separation structure according to the invention are comparable to that of traditional systems and, in any case, are such as to satisfy the minimum level of noise reduction between two adjacent cabins required by the standard (41 dB).

The tests were conducted on separation structures based on single-face panels with first metal sheet made of steel having a thickness of 0.7 mm. Ultimate U MPN/A 100 with a density 100 kg/m$^3$ was used as the soundproofing material. The results of these tests are reported in Table 4 and refer to a partition surface between two cabins of 6.86 m$^2$.

The values reported in Table 4 refer to a surface of 6,86 m$^2$. Extrapolating the results of these measurements, by calculation, to a surface of 10m$^2$, the values increase by about 2 dB.

Table 4

| Thickness of Ultimate layer [mm] | Air gap [mm] | R'w |
|---|---|---|
| 15 | 10 | 43 |
| 15 | 20 | 43 |
| 15 | 30 | 43 |
| 25 | 10 | 44 |
| 25 | 20 | 44 |
| 25 | 30 | 44 |

An object of this invention is the use of soundproofing material comprising mineral wool having a fibred structure with a content of non-fibred material of less than 1% by weight, an apparent density between 80 and 120 kg/m$^3$, preferably between 100 and 120 kg/m$^3$, and still more preferably, equal to 100 kg/m$^3$, and a resistivity to airflow between 50 and 300 kPa s/m$^2$, preferably not less than 70 kPa s/m$^2$, to create layers of soundproofing material in a separation structure between two adjacent cabins C1 and C2 with two partition walls W1 and W2 facing opposite one to the other, separated by an air gap 30, as previously described.

An object of this invention is a panel 2 or 20 for the construction of cabin perimetric walls, comprising at least one first metal sheet 3, having a first face 3a intended to face the inside of the cabin, and at least one layer of soundproofing material 4 associated to a second face 3b of the first metal sheet 3, opposite to the first. According to the invention, the first metal sheet 3 is made of an iron alloy and has a thickness between 0.5 and 0.9 mm. The soundproofing material comprises mineral wool having a fibred structure with a content of non-fibred material of less than 1% by weight, an apparent density between 80 and 120 kg/m$^3$, preferably between 100 and 120 kg/m$^3$, and still more preferably, equal to 100 kg/m$^3$, and a resistivity to airflow between 50 and 300 kPa s/m$^2$, preferably not less than 70 kPa s/m$^2$. The layer of soundproofing material 4 has a thickness between 12 and 28 mm, and preferably between 15 and 25 mm. The above-mentioned panel 2 or 20 is intended to define a partition wall W1 or W2 of a separation structure according to the invention as described above.

The object of this invention is a passenger ship, in particular a cruise ship, comprising a plurality of passenger cabins. The separation between adjacent cabins of at least a part of the passenger cabins of such a ship is made by using the separation structure according to the invention as described above.

Advantageously, the separation between the cabins and the corridors of at least a part of the passenger cabins of said ship can be made using said separation structure 1, wherein the partition wall of one of the two cabins C1 or C2 corresponds to a wall of a corridor.

The invention allows obtaining numerous advantages, some of which have already been highlighted previously.

The double-wall separation structure with air gap between two adjacent cabins according to the invention allows obtaining - being spatial configuration equal - significant weight reductions compared to similar traditional separation systems, while offering noise reduction performance between to cabins comparable to similar traditional systems.

This reduction in weight has significant effects on the total weight of a medium-sized cruise ship, due to the large number of cabins required.

The double-wall separation structure with air gap according to the invention can advantageously be constructed to provide mechanical strength comparable to similar traditional separation systems.

The panel for the construction of cabin perimetric walls according to the invention has a specific weight on surface lower than that of similar traditional panels and, at the same time, allows obtaining noise reduction performance comparable to them when inserted in double-wall separation structures with air gap.

The panel for the construction of cabin perimetric walls according to the invention has a mechanical strength comparable to similar traditional panels.

Therefore, the invention thus conceived achieves the predefined purposes.

Obviously, it may even assume, in its practical embodiment, forms and configurations different from that illustrated above without, for this reason, departing from the present scope of protection.

Moreover, all the details may be replaced by technically equivalent elements and the dimensions, forms and materials used may be any according to the needs.

**Claims**

1. Separation structure between two adjacent cabins (C1, C2), comprising two partition walls (W1, W2) facing opposite one to the other, that belong to the perimetric structure of two different cabins (C1, C2) and are separated by an air gap (30), each of the two partition walls (W1, W2) consisting of at least one partition panel (2) comprising: at least one first metal sheet (3), having a first face (3a) facing towards the inside of the relative cabin; and at least one layer of soundproofing material (4) associated to a second face (3b) of the metal sheet (3), facing towards the air gap (30), said separation structure (1) being **characterized by** the fact that in each panel:

   - said first metal sheet (3) is made of an iron alloy and has a thickness between 0.5 and 0.9 mm;
   - said soundproofing material comprises mineral wool having a fibred structure with a content of non-fibred material of less than 1% by weight, an apparent density between 80 and 120 $kg/m^3$, preferably between 100 and 120 $kg/m^3$, and still more preferably, equal to 100 $kg/m^3$, and a resistivity to airflow between 50 and 300 $kPa\ s/m^2$, preferably not less than 70 $kPa\ s/m^2$; and
   - said layer of soundproofing material (4) has a thickness between 12 and 28 mm, and preferably between 15 and 25 mm,
   said separation structure giving an apparent sound reduction index R'w between the two adjacent cabins (C1, C2) not less than 43 dB $\pm 1$ dB.

2. Structure according to claim 1, wherein the fibres of the fibrous structure have a weighted geometric mean diameter, with respect to the length of the fibres, less than 10 $\mu$m, preferably less than 6 $\mu$m, and still more preferably between about 3 $\mu$m and about 5 $\mu$m.

3. Structure according to claim 1 or 2, wherein said mineral wool is obtained with a high-temperature extrusion process and internal centrifugation in the centrifuge basket procedure with a temperature of the centrifuge basket of at least 1,100 °C.

4. Structure according to claim 1, 2 or 3, wherein said mineral wool consists of artificial vitreous fibres of silicates having a content of alkaline oxides and alkaline-earth oxides greater than 18% by weight.

5. Structure according to one or more of the preceding claims, wherein said soundproofing material comprises an organic binder, preferably a terpolymer, mixed with said mineral wool, preferably said mineral wool making up more than 90% by weight of the material and the binder less than 10% by weight.

6. Structure according to one or more of the preceding claims, wherein the air gap (30) has a depth sufficient to avoid any contact between the two walls (W1, W2).

7. Structure according to one or more of the preceding claims, wherein the first sheet (3) of the panel (2) of each partition wall (W1, W2) is folded at least at some of its perimetric edges to provide greater perimetric stiffness to the panel, preferably the folding of the edges being formed so as to obtain a folded edge comprising at least one L-shaped portion.

8. Structure according to claim 7, wherein said first sheet (3) comprises two pairs of parallel perimetric edges (5, 6), preferably the perimetric edges of a first pair (5) being longer than the perimetric edges of the second pair (6), said first sheet (3) being folded in correspondence of the pair (5) of the longer edges.

9. Structure according to claim 8, wherein said first sheet (3) is stiffened also in correspondence of the two shorter perimetric edges (6) by folding the edges themselves or by application on the first sheet of a perimetric stiffening member, preferably L-shaped.

10. Structure according to one or more of the preceding claims, wherein said first sheet (3) is reinforced locally with one or more reinforcing plates (7) associated to it on the second face (3b).

11. Structure according to one or more of the preceding claims, wherein the panel (2) of each partition wall (W1, W2) is a single-face panel, in which the layer of soundproofing material (4) is not separated from the air gap (30) by a second metal sheet, wherein preferably in at least one of the two panels (2), the layer of soundproofing material (4) directly faces the air gap (30) .

12. Structure according to claim 11, wherein at least one panel (2) of one of the two partition walls (W1, W2) comprises one or more tubes (9) for the passage of electrical cables placed onto the layer of soundproofing material (4) on the face of the latter facing towards the air gap (30), wherein preferably in at least one panel (2) of a partition wall (W1, W2), the layer of soundproofing material (4) is separated from the air gap (30) by a layer of non-metallic material (8) having a heat protective function, said tubes (9) being interposed between said layer of soundproofing material (4) and said layer of non-metallic material (8) with heat protective function.

13. Structure according to claim 11 or 12, wherein the layer of soundproofing material has a thickness equal to 15 mm and wherein the air gap (30) has a depth between 10 and 60 mm, and preferably between 40 and 60 mm , measured between the outer surfaces of the layers of soundproofing material (4) of the two panels (2) and wherein the air gap (30) has a depth between 10 and 60 mm, and preferably between 40 and 60 mm , measured between the outer surfaces of the layers of soundproofing material (4) of the two panels (2).

14. Structure according to one or more of claims 11 to 13, wherein said single-face panel (2) comprises a plurality of elongated transverse stiffening members (12), associated to the first sheet (3) and embedded in the layer of soundproofing material (4), preferably said elongated members (12) having an inverted T or $\Omega$ section, preferably said elongated members (12) being glued to said first sheet (3).

15. Structure according to one or more of claims 1 to 10, wherein the panel (20) of each partition wall (W1, W2) (20) is a double-face panel, comprising a second metal sheet (13) that is associated to the first sheet (3) and directly faces the air gap (30), the layer of soundproofing material (4) being interposed between said two sheets (3, 13), preferably said second metal sheet (13) being made of the same material as the first sheet (3), wherein preferably said double-face panel (20) is not provided with elongated transverse reinforcing members.

16. Structure according to claim 15, wherein the air gap (30) has a depth between 10 and 13 mm, preferably 20 mm, measured between the outer surfaces of the second metal sheets (13) of the two panels (20) and wherein the first metal sheet (3) has a thickness between 0.4 and 0.6 mm, preferably 0.5 mm, and the second metal sheet (13) has a thickness between 0.3 and 0.3 mm, preferably 0.3 mm and wherein the layer of soundproofing material (4) has a thickness between 20 and 28 mm, preferably 25 mm..

17. Use of soundproofing material comprising mineral wool having a fibred structure with a content of non-fibred material of less than 1% by weight, an apparent density between 80 and 120 kg/m$^3$, preferably between 100 and 120 kg/m$^3$, and still more preferably, equal to 100 kg/m$^3$, and a resistivity to airflow between 50 and 300 kPa s/m$^2$, preferably not less than 70 kPa s/m$^2$, to create layers of soundproofing material in a separation structure between two adjacent cabins (C1, C2) with two partition walls (W1, W2) facing opposite on to the other, separated by an air gap (30), according to one or more of the preceding claims.

18. Panel for the construction of cabin perimetric walls, comprising at least one first metal sheet (3), having a first face (3a) destined to face the inside of the cabin, and at least one layer of soundproofing material (4) associated to a second face (3b) of the first metal sheet (3), opposite to the first, **characterized in that**:

- said first metal sheet (3) is made of an iron alloy and has a thickness between 0.5 and 0.9 mm;
- said soundproofing material comprises mineral wool having a fibred structure with a content of non-fibred material of less than 1% by weight, an apparent density between 80 and 120 kg/m$^3$, preferably between 100 and 120 kg/m$^3$, and still more preferably, equal to 100 kg/m$^3$, and a resistivity to airflow between 50 and 300 kPa s/m$^2$, preferably not less than 70 kPa s/m$^2$; and
- said layer of soundproofing material (4) has a thickness between 12 and 28 mm, and preferably between 15 and 25 mm,
said panel (2, 20) being intended to define a partition wall (W1, W2) of a separation structure according to one or more of claims 1 to 16.

19. Passenger ship, in particular a cruise ship, comprising a plurality of passenger cabins, **characterized in that** the separation between adjacent cabins of at least a part of the passenger cabins of said ship is constructed using the separation structure according to one or more of claims 1 to 16, wherein preferably the separation of cabins and corridors of at least a part of the passenger cabins of the said ship is made using said separation structure, wherein the partition wall of one of the two cabins (C1 or C2) corresponds to a wall of a corridor.


**Patentansprüche**

1. Separierstruktur zwischen zwei benachbarten Kabinen (C1, C2), umfassend zwei einander gegenüberliegende bzw. entgegengesetzte Trennwände (W1, W2), die zu der perimetrischen Struktur zweier unterschiedlicher Kabinen (C1, C2) gehören und durch einen Luftspalt (30) separiert sind, wobei jede der beiden Trennwände (W1, W2) aus zumindest einer Trennplatte (2) besteht, die umfasst: zumindest ein erstes Metallblech (3) mit einer ersten Fläche (3a), die der Innenseite der relativen Kabine zugewandt ist; und zumindest eine Schicht aus Schallschutzmaterial (4), die einer zweiten Fläche (3b) des Metallblechs (3) zugeordnet ist und dem Luftspalt (30) zugewandt ist, wobei die Separierstruktur (1) durch die Tatsache gekennzeichnet ist, dass in jeder Platte:

- das erste Metallblech (3) aus einer Eisenlegierung besteht und hat eine Dicke zwischen 0,5 und 0,9 mm aufweist;
- das Schallschutzmaterial Mineralwolle mit einer Faserstruktur mit einem Gehalt an nichtfaserigem Material von weniger als 1 Gew.-%, einer scheinbaren Dichte zwischen 80 und 120 kg/m$^3$, vorzugsweise zwischen 100 und 120 kg/m$^3$ und noch bevorzugter gleich 100 kg/m$^3$ und einem spezifischen Luftstromwiderstand zwischen 50 und 300 kPa s/m$^2$, vorzugsweise nicht weniger als 70 kPa s/m$^2$ umfasst, und
- die Schicht aus Schallschutzmaterial (4) eine Dicke zwischen 12 und 28 mm und vorzugsweise zwischen 15 und 25 mm aufweist,
wobei die Separierstruktur einen scheinbaren Schallminderungsindex R'w zwischen den beiden benachbarten Kabinen (C1, C2) von nicht weniger als 43 dB $\pm$ 1 dB gibt.

2. Struktur nach Anspruch 1, wobei die Fasern der Faserstruktur einen gewichteten geometrischen mittleren Durchmesser in Bezug auf die Länge der Fasern von weniger als 10 $\mu$m, vorzugsweise weniger als 6 $\mu$m und noch bevorzugter zwischen etwa 3 $\mu$m und etwa 5 $\mu$m aufweisen.

3. Struktur nach Anspruch 1 oder 2, wobei die Mineralwolle mit einem Hochtemperaturextrusionsprozess und interner Zentrifugation im Zentrifugenkorbverfahren mit einer Temperatur des Zentrifugenkorbs von zumindest 1100 C erhalten wird.

4. Struktur nach Anspruch 1, 2 oder 3, wobei die Mineralwolle aus künstlichen glasigen Fasern von Silikaten mit einem Gehalt an Alkalioxiden und Erdalkalioxiden von mehr als 18 Gew.-% besteht.

5. Struktur nach einem oder mehreren der vorhergehenden Ansprüche, wobei das Schallschutzmaterial ein organisches Bindemittel umfasst, vorzugsweise ein Terpolymer, das mit der Mineralwolle gemischt ist, wobei vorzugsweise die Mineralwolle mehr als 90 Gew.-% des Materials ausmacht und das Bindemittel weniger als 10 Gew.-% ausmacht.

6. Struktur nach einem oder mehreren der vorhergehenden Ansprüche, wobei der Luftspalt (30) eine Tiefe aufweist, die ausreichend ist, um jeglichen Kontakt zwischen den beiden Wänden (W1, W2) zu vermeiden.

7. Struktur nach einem oder mehreren der vorhergehenden Ansprüche, wobei das erste Blech (3) der Platte (2) jeder Trennwand (W1, W2) zumindest an einigen ihrer perimetrischen Kanten gefaltet ist, um eine größere perimetrische Steifigkeit für die Platte bereitzustellen, wobei vorzugsweise die Faltung der Kanten so geformt ist, dass eine gefaltete Kante erhalten wird, die zumindest einen L-förmigen Abschnitt umfasst.

8. Struktur nach Anspruch 7, wobei das erste Blech (3) zwei Paare paralleler perimetrischer Kanten (5, 6) umfasst, wobei vorzugsweise die perimetrischen Kanten eines ersten Paares (5) länger sind als die perimetrischen Kanten des zweiten Paares (6), wobei das erste Blech (3) entsprechend dem Paar (5) der längeren Kanten gefaltet ist.

9. Struktur nach Anspruch 8, wobei das erste Blech (3) auch entsprechend den beiden kürzeren perimetrischen Kanten (6) durch Falten der Kanten selbst oder durch Aufbringen eines perimetrischen Versteifungselements, vorzugsweise L-förmig, auf das erste Blech versteift wird.

10. Struktur nach einem oder mehreren der vorhergehenden Ansprüche, wobei das erste Blech (3) lokal mit einer oder mehreren Verstärkungsplatten (7) verstärkt ist, die ihm auf der zweiten Fläche (3b) zugeordneten sind.

11. Struktur nach einem oder mehreren der vorhergehenden Ansprüche, wobei die Platte (2) jeder Trennwand (W1, W2) eine Einflächenplatte ist, bei der die Schicht aus Schallschutzmaterial (4) nicht von dem Luftspalt (30) durch ein zweites Metallblech separiert ist, wobei vorzugsweise in zumindest einer der beiden Platten (2) die Schicht aus Schallschutzmaterial (4) direkt dem Luftspalt (30) zugewandt ist.

12. Struktur nach Anspruch 11, wobei zumindest eine Platte (2) einer der beiden Trennwände (W1, W2) ein oder mehrere Rohre (9) für den Durchgang von elektrischen Kabeln umfasst, die auf die Schicht aus Schallschutzmaterial (4) auf der Fläche des letzteren platziert sind, die dem Luftspalt (30) zugewandt sind, wobei vorzugsweise in zumindest einer Platte (2) einer Trennwand (W1, W2) die Schicht aus Schallschutzmaterial (4) von dem Luftspalt (30) durch eine Schicht aus nichtmetallischem Material (8) mit einer Hitzeschutzfunktion separiert ist, wobei die Rohre (9) zwischen der Schicht aus Schallschutzmaterial (4) und der Schicht aus nichtmetallischem Material (8) mit Hitzeschutzfunktion angeordnet sind.

13. Struktur nach Anspruch 11 oder 12, wobei die Schicht aus Schallschutzmaterial eine Dicke von gleich 15 mm aufweist und wobei der Luftspalt (30) eine Tiefe zwischen 10 und 60 mm und vorzugsweise zwischen 40 und 60 mm aufweist, gemessen zwischen den Außenflächen der Schichten aus Schallschutzmaterial (4) der beiden Platten (2), und wobei der Luftspalt (30) eine Tiefe zwischen 10 und 60 mm und vorzugsweise zwischen 40 und 60 mm aufweist, gemessen zwischen den Außenflächen der Schichten aus Schallschutzmaterial (4) der beiden Platten (2).

14. Struktur nach einem oder mehreren der Ansprüche 11 bis 13, wobei die Einflächenplatte (2) eine Mehrzahl von länglicher Querversteifungsglieder (12) umfasst, die dem ersten Blech (3) zugeordnet und in die Schicht aus Schallschutzmaterial (4) eingebettet sind, wobei vorzugsweise die länglichen Glieder (12) einen umgekehrten T- oder Ω-Schnitt aufweisen, wobei vorzugsweise die länglichen Elemente (12) mit dem ersten Blech (3) verklebt sind.

15. Struktur nach einem oder mehreren der Ansprüche 1 bis 10, wobei die Platte (20) jeder Trennwand (W1, W2) (20) eine Doppelflächenplatte ist, die ein zweites Metallblech (13) umfasst, das dem ersten Blech (3) zugeordnet und direkt dem Luftspalt (30) zugewandt ist, wobei die Schicht aus Schallschutzmaterial (4) zwischen den beiden Blechen (3, 13) angeordnet ist, wobei vorzugsweise das zweite Metallblech (13) aus demselben Material besteht wie das erste Blech (3), wobei vorzugsweise die Doppelflächenplatte (20) nicht mit länglichen Querverstärkungsgliedern versehen ist.

16. Struktur nach Anspruch 15, wobei der Luftspalt (30) eine Tiefe zwischen 10 und 13 mm, vorzugsweise 20 mm aufweist, gemessen zwischen den Außenflächen der zweiten Metallbleche (13) der beiden Platten (20), und wobei das erste Metallblech (3) eine Dicke zwischen 0,4 und 0,6 mm, vorzugsweise 0,5 mm und das zweite Metallblech (13) eine Dicke zwischen 0,3 und 0,3 mm, vorzugsweise 0,3 mm aufweist, und wobei die Schicht aus Schallschutzmaterial (4) eine Dicke zwischen 20 und 28 mm, vorzugsweise 25 mm aufweist.

17. Verwendung von Schallschutzmaterial aus Mineralwolle mit einer Faserstruktur mit einem Gehalt an nichtfaserigem Material von weniger als 1 Gew.-%, einer scheinbaren Dichte zwischen 80 und 120 kg/m$^3$, vorzugsweise zwischen 100 und 120 kg/m$^3$ und noch bevorzugter gleich 100 kg/m$^3$ und einem spezifischen Luftstromwiderstand zwischen 50 und 300 kPa s/m$^2$, vorzugsweise nicht weniger als 70 kPa s/m$^2$, um Schichten aus Schallschutzmaterial in einer Separierstruktur zwischen zwei benachbarten Kabinen (C1, C2) mit zwei einander gegenüberliegenden bzw. entgegengesetzten Trennwänden (W1, W2) zu erzeugen, die durch einen Luftspalt (30) separiert sind, und zwar gemäß einem oder mehreren der vorhergehenden Ansprüche.

18. Platte für die Konstruktion von perimetrischen Kabinenwänden, umfassend zumindest ein erstes Metallblech (3) mit einer ersten Fläche (3a), die dazu bestimmt ist, der Innenseite der Kabine zugewandt zu sein, und zumindest einer Schicht aus Schallschutzmaterial (4), die einer zweiten Fläche (3b) des ersten Metallblechs (3) gegenüberliegend bzw. entgegengesetzt zu der ersten zugeordnet ist, **dadurch gekennzeichnet, dass**:

- das erste Metallblech (3) aus einer Eisenlegierung besteht und eine Dicke zwischen 0,5 und 0,9 mm aufweist;
- das Schallschutzmaterial Mineralwolle mit einer Faserstruktur mit einem Gehalt an nichtfaserigem Material von weniger als 1 Gew.-%, einer scheinbaren Dichte zwischen 80 und 120 kg/m$^3$, vorzugsweise zwischen 100 und 120 kg/m$^3$ und noch bevorzugter gleich 100 kg/m$^3$ und einem spezifischen Luftstromwiderstand zwischen 50 und 300 kPa s/m$^2$, vorzugsweise nicht weniger als 70 kPa s/m$^2$ umfasst; und
- die Schicht aus Schallschutzmaterial (4) eine Dicke zwischen 12 und 28 mm und vorzugsweise zwischen 15 und 25 mm aufweist,
wobei die Platte (2, 20) dazu bestimmt ist, eine Trennwand (W1, W2) einer Separierstruktur gemäß zu einem oder mehreren der Ansprüche 1 bis 16 zu definieren.

19. Passagierschiff, insbesondere ein Kreuzfahrtschiff, umfassend eine Mehrzahl von Passagierkabinen, **dadurch gekennzeichnet, dass** die Separierung zwischen benachbarten Kabinen von zumindest einem Teil der Passagierkabinen des Schiffes unter Verwendung der Separierstruktur gemäß einer oder mehreren der Ansprüche 1 bis 16 konstruiert ist, wobei vorzugsweise die Separierung von Kabinen und Korridoren von zumindest einem Teil der Passagierkabinen des Schiffes unter Verwendung der Separierstruktur erfolgt, wobei die Trennwand einer der beiden Kabinen (C1 oder C2) einer Wand eines Korridors entspricht.

## Revendications

1. Structure de séparation entre deux cabines (C1, C2) adjacentes, comprenant deux parois de séparation (W1, W2) opposées l'une à l'autre, qui appartiennent à la structure périmétrique de deux différentes cabines (C1, C2) et sont séparées par un entrefer (30), chacune des deux parois de séparation (W1, W2) étant constituée d'au moins un panneau de séparation (2) comprenant : au moins une première feuille métallique (3), ayant une première face (3a) orientée vers l'intérieur de la cabine relative ; et au moins une couche de matériau d'insonorisation (4) associée à une seconde face (3b) de la feuille métallique (3), orientée vers l'entrefer (30), ladite structure de séparation (1) étant **caractérisée par le fait que** dans chaque panneau :

- ladite première feuille métallique (3) est faite d'un alliage de fer et a une épaisseur entre 0,5 et 0,9 mm ;
- ledit matériau d'insonorisation comprend de la laine minérale ayant une structure à fibres ayant une teneur en matériau non fibreux de moins de 1 % en poids, une masse volumique apparente entre 80 et 120 kg/m$^3$, de préférence entre 100 et 120 kg/m$^3$, et de manière encore davantage préférée, égale à 100 kg/m$^3$, et une résistivité à l'écoulement d'air entre 50 et 300 kPa s/m$^2$, de préférence non inférieure à 70 kPa s/m$^2$ ; et
- ladite couche de matériau d'insonorisation (4) a une épaisseur entre 12 et 28 mm, et de préférence entre 15 et 25 mm,
ladite structure de séparation donnant un indice de réduction sonore apparente R'w entre les deux cabines (C1, C2) adjacentes non inférieur à 43 dB $\pm$ 1 dB.

2. Structure selon la revendication 1, dans laquelle les fibres de la structure fibreuse ont un diamètre moyen géométrique pondéré, par rapport à la longueur des fibres, inférieur à 10 $\mu$m, de préférence inférieur à 6 $\mu$m, et de manière encore davantage préférée entre environ 3 $\mu$m et environ 5 $\mu$m.

3. Structure selon la revendication 1 ou 2, dans laquelle ladite laine minérale est obtenue par un procédé d'extrusion à haute température et une centrifugation interne dans la procédure de panier centrifuge avec une température du panier centrifuge d'au moins 1100 °C.

4. Structure selon la revendication 1, 2 ou 3, dans laquelle ladite laine minérale est constituée de fibres vitreuses artificielles de silicates ayant une teneur en oxydes alcalins et oxydes alcalino-terreux supérieure à 18 % en poids.

5. Structure selon une ou plusieurs des revendications précédentes, dans laquelle ledit matériau d'insonorisation comprend un liant organique, de préférence un terpolymère, mélangé à ladite laine minérale, de préférence ladite laine minérale représentant plus de 90 % en poids du matériau et le liant moins de 10 % en poids.

6. Structure selon une ou plusieurs des revendications précédentes, dans laquelle l'entrefer (30) a une profondeur suffisante pour éviter tout contact entre les deux parois (W1, W2).

7. Structure selon une ou plusieurs des revendications précédentes, dans laquelle la première feuille (3) du panneau (2) de chaque paroi de séparation (W1, W2) est pliée au moins au niveau de certains de ses bords périmétriques pour offrir une rigidité périmétrique supérieure au panneau, de préférence le pliage des bords étant formé de façon à obtenir un bord plié comprenant au moins une partie en forme de L.

8. Structure selon la revendication 7, dans laquelle ladite première feuille (3) comprend deux paires de bords périmétriques (5, 6) parallèles, de préférence les bords périmétriques d'une première paire (5) étant plus longs que les bords périmétriques de la seconde paire (6), ladite première feuille (3) étant pliée de manière à correspondre à la paire (5) des bords les plus longs.

9. Structure selon la revendication 8, dans laquelle ladite première feuille (3) est rigidifiée également de manière à correspondre aux deux bords périmétriques (6) les plus courts par pliage des bords eux-mêmes ou par application sur la première feuille d'un élément rigidifiant périmétrique, de préférence en forme de L.

10. Structure selon une ou plusieurs des revendications précédentes, dans laquelle ladite première feuille (3) est renforcée localement par une ou plusieurs plaques de renfort (7) associées à celle-ci sur la seconde face (3b).

11. Structure selon une ou plusieurs des revendications précédentes, dans laquelle le panneau (2) de chaque paroi de séparation (W1, W2) est un panneau à simple face, dans lequel la couche de matériau d'insonorisation (4) n'est pas séparée de l'entrefer (30) par une seconde feuille métallique, dans laquelle de préférence dans au moins l'un des deux panneaux (2), la couche de matériau d'insonorisation (4) est orientée face à l'entrefer (30).

12. Structure selon la revendication 11, dans laquelle au moins un panneau (2) de l'une des deux parois de séparation (W1, W2) comprend un ou plusieurs tubes (9) pour le passage de câbles électriques placés sur la couche de matériau d'insonorisation (4) sur la face de ce dernier orientée vers l'entrefer (30), dans laquelle de préférence dans au moins un panneau (2) d'une paroi de séparation (W1, W2), la couche de matériau d'insonorisation (4) est séparée de l'entrefer (30) par une couche de matériau non métallique (8) ayant une fonction de protection thermique, lesdits tubes (9) étant interposés entre ladite couche de matériau d'insonorisation (4) et ladite couche de matériau non métallique (8) ayant une fonction de protection thermique.

13. Structure selon la revendication 11 ou 12, dans laquelle la couche de matériau d'insonorisation a une épaisseur égale à 15 mm et dans laquelle l'entrefer (30) a une profondeur entre 10 et 60 mm, et de préférence entre 40 et 60 mm, mesurée entre les surfaces externes des couches de matériau d'insonorisation (4) des deux panneaux (2) et dans laquelle l'entrefer (30) a une profondeur entre 10 et 60 mm, et de préférence entre 40 et 60 mm, mesurée entre les surfaces externes des couches de matériau d'insonorisation (4) des deux panneaux (2).

14. Structure selon une ou plusieurs des revendications 11 à 13, dans laquelle ledit panneau à simple face (2) comprend une pluralité d'éléments rigidifiants transversaux allongés (12), associés à la première feuille (3) et incorporés dans la couche de matériau d'insonorisation (4), de préférence lesdits éléments allongés (12) ayant une section en T ou Ω inversé, de préférence lesdits éléments allongés (12) étant collés à ladite première feuille (3).

15. Structure selon une ou plusieurs des revendications 1 à 10, dans laquelle le panneau (20) de chaque paroi de séparation (W1, W2) (20) est un panneau à double face, comprenant une seconde feuille métallique (13) qui est associée à la première feuille (3) et est orientée face à l'entrefer (30), la couche de matériau d'insonorisation (4) étant interposée entre lesdites deux feuilles (3, 13), de préférence ladite seconde feuille métallique (13) étant faite du même matériau que la première feuille (3), dans laquelle de préférence ledit panneau à double face (20) n'est pas doté d'éléments de renfort transversaux allongés.

16. Structure selon la revendication 15, dans laquelle l'entrefer (30) a une profondeur entre 10 et 13 mm, de préférence de 20 mm, mesurée entre les surfaces externes des secondes feuilles métalliques (13) des deux panneaux (20) et dans laquelle la première feuille métallique (3) a une épaisseur entre 0,4 et 0,6 mm, de préférence de 0,5 mm, et la seconde feuille métallique (13) a une épaisseur entre 0,3 et 0,3 mm, de préférence de 0,3 mm et dans laquelle la couche de matériau d'insonorisation (4) a une épaisseur entre 20 et 28 mm, de préférence de 25 mm.

17. Utilisation d'un matériau d'insonorisation comprenant de la laine minérale ayant une structure fibreuse ayant une teneur en matériau non fibreux de moins de 1 % en poids, une masse volumique apparente entre 80 et 120 kg/m$^3$, de préférence entre 100 et 120 kg/m$^3$, et de manière encore davantage préférée, égale à 100 kg/m$^3$, et une résistivité à l'écoulement d'air entre 50 et 300 kPa s/m$^2$, de préférence non inférieure à 70 kPa s/m$^2$, pour créer des couches de matériau d'insonorisation dans une structure de séparation entre deux cabines (C1, C2) adjacentes ayant deux parois de séparation (W1, W2) opposées l'une à l'autre, séparées par un entrefer (30), selon une ou plusieurs des revendications précédentes.

18. Panneau pour la construction de parois périmétriques de cabine, comprenant au moins une première feuille métallique (3), ayant une première face (3a) destinée à être orientée vers l'intérieur de la cabine, et au moins une couche de matériau d'insonorisation (4) associée à une seconde face (3b) de la première feuille métallique (3), opposée à la première, **caractérisé en ce que** :

   - ladite première feuille métallique (3) est faite d'un alliage de fer et a une épaisseur entre 0,5 et 0,9 mm ;
   - ledit matériau d'insonorisation comprend de la laine minérale ayant une structure fibreuse ayant une teneur en matériau non fibreux de moins de 1 % en poids, une masse volumique apparente entre 80 et 120 kg/m$^3$, de préférence entre 100 et 120 kg/m$^3$, et de manière encore davantage préférée, égale à 100 kg/m$^3$, et une résistivité à l'écoulement d'air entre 50 et 300 kPa s/m$^2$, de préférence non inférieure à 70 kPa s/m$^2$ ; et
   - ladite couche de matériau d'insonorisation (4) a une épaisseur entre 12 et 28 mm, et de préférence entre 15 et 25 mm,
   ledit panneau (2, 20) étant destiné à définir une paroi de séparation (W1, W2) d'une structure de séparation selon une ou plusieurs des revendications 1 à 16.

19. Navire de passagers, en particulier un navire de croisière, comprenant une pluralité de cabines de passagers, **caractérisé en ce que** la séparation entre les cabines adjacentes d'au moins une partie des cabines de passagers dudit navire est construite en utilisant la structure de séparation selon une ou plusieurs des revendications 1 à 16, dans lequel de préférence la séparation des cabines et des couloirs d'au moins une partie des cabines de passagers dudit navire est réalisée en utilisant ladite structure de séparation, dans laquelle la paroi de séparation d'une des deux cabines (C1 ou C2) correspond à une paroi d'un couloir.

FIG.1

FIG.2

FIG.3

FIG.4

EP 3 261 910 B1

FIG.5

FIG.6

FIG.7

FIG.8a   FIG.8b

FIG.9

FIG.10

**FIG.11**

**FIG.12**

**FIG.13**

## FIG.14

FIG.15

**FIG.16**

FIG.17

EP 3 261 910 B1

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- DE 29919825 U1
- EP 0111857 A1
- EP 551476 B1
- EP 583792 B1
- EP 1680561 B1
- US 7803729 B2
- US 8026190 B2